(19) **Europäisches Patentamt**

**European Patent Office**

**Office européen des brevets**

(11) **EP 1 052 784 B1**

(12) **EUROPEAN PATENT SPECIFICATION**

(45) Date of publication and mention
of the grant of the patent:
**30.08.2006 Bulletin 2006/35**

(51) Int Cl.:
***H04B 7/005*** *(2006.01)*

(21) Application number: **99109599.3**

(22) Date of filing: **14.05.1999**

(54) **Adaptive filtering for mobile communication system**

Adaptive Filterung für Mobilfunkübertragungssystem

Filtrage adaptif pour un système de communication mobile

(84) Designated Contracting States:
**DE DK FR GB SE**

(43) Date of publication of application:
**15.11.2000 Bulletin 2000/46**

(73) Proprietor: **ROBERT BOSCH GMBH**
**70442 Stuttgart (DE)**

(72) Inventors:
• **Knudsen, Jasper**
**9210 Aalborg SO (DK)**
• **Vejlgaard, Benny**
**9220 Aalborg (DK)**

(56) References cited:
**EP-A- 0 080 400** **EP-A- 0 567 211**
**EP-A- 0 804 007** **DE-A- 19 635 271**
**US-A- 5 323 422**

EP 1 052 784 B1

**Description**

BACKGROUND OF THE INVENTION

The present invention relates to a signal receiving method and apparatus for mobile communication systems, and particularly for digital mobile phone systems.

Although applicable to any mobile communication system, the present invention and its underlying problems will be discussed with particular reference to UMTS mobile phone systems.

In general, the requirement for mobile phone speeds in GSM (global system mobile), a current second generation mobile communication system, amounts to 250 km/h at a carrier frequency of 900 MHz. This gives a maximum Doppler frequency of 208 Hz. See for example GSM 05.05, radio transmission and reception, version 5.3.0, table 1 and 2.

The requirements for mobile phones speeds in UMTS (universal mobile telephone system), a third generation mobile communication system, amounts to 500 km/h at a carrier frequency of 2000 MHz. This gives a maximum Doppler frequency of 926 MHz. See for example UMTS Terrestrial Radio Access Physical Layer description, version 0.3.

The general problem underlying the present invention is that the data receiver structures used in mobile communication systems, particularly digital mobile communications systems, are very sensitive to frequency offset, which is caused by Doppler frequency. The GSM system usually works without conpensation for the Doppler frequency. However, there have been proposals to use adaptive algorithms in GSM to increase the performance of GSM systems at high speed. See Alfred Baier, correlative and iterative channel estimation in adaptive Viterbi equalizer for TDMA mobile radio systems, Philips Kommunikations Industrie AG, Nürnberg, ITG Fachberichte, Vorträge der ITG Fachtagung 1989, VDE-Verlag GmbH.

Such a system as proposed in GSM can be converted to fit the UMTS system which uses CDMA instead of TDMA in GSM. The underlying general idea is to use an adaptive filter to track the channel. Such a system can be an LMS filter (LMS = Least-Mean-Square algorithm) as described in Simon Haykin, Adaptive Filter Theory, Second Edition, 1991.

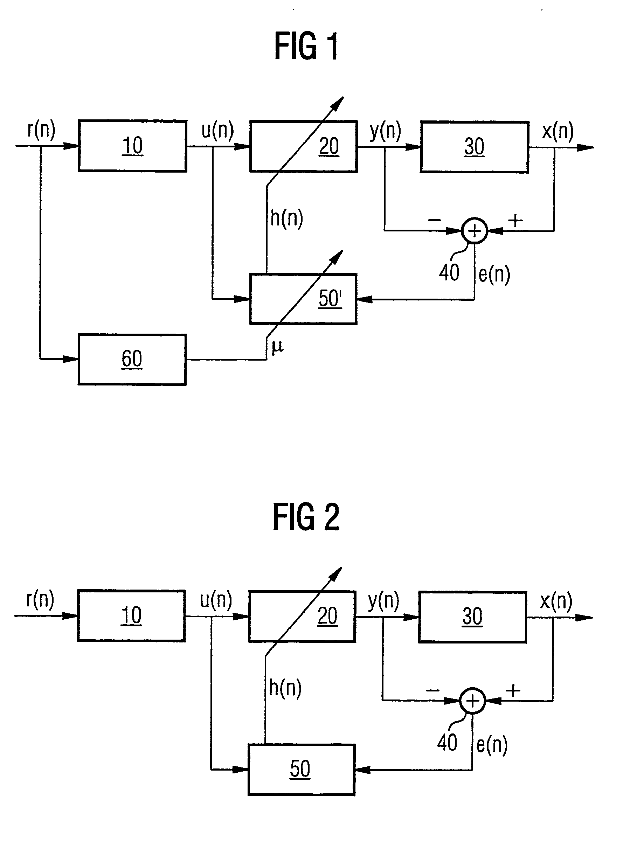

An implementation of such a data receiver for UMTS with Doppler frequency compensation is illustrated in figure 2.

EP 804 007 A2 shows an adaptive equalizer with a step size proportional to the estimated delay between received signals. The object is to improve the estimation accuracy of the channel and to achieve good demodulation characteristics, although there is gross distortion of waveforms of a received signal resulting from frequency selective fading. Therefore the delay is estimated based on peak position of the receiving signal at every predetermined observation period. Based on estimated delay the step size of the equalizer is adapted.

EP 567 211 A2 shows a solution which is capable of tracking the changes caused by the Doppler shift.

In figure 2, 10 denotes a despreader, 20 a tranversal filter, 30 a decision mechanism, 40 an adder, and 50 an adaptive weight control.

The filter coefficients of the adaptive tranversal filter 20 shown in figure 2 can be described by the following equation:

$$h_i(n+1) = h_i(n) + \mu u(n-i) * e(n) \tag{1}$$

Here, $h_i(n)$ is the adaptive filter coefficient, n being an integer, $\mu$ is a step size, $u(n)$ is the despread input to the filter 20, $e(n)$ is the error between the detected symbol and the filter output $y(n)$.

The Haykin reference describes certain limits of the step size $\mu$. However, the step size $\mu$ cannot be fixed at one optimal value for or cases of the mobil speed. If the step size is large, the preformance at low speed decreases, while the preformance at high-speed is acceptable. If the step size is small, the preformance at high speed decreases rapidly, while the performance at low speed is acceptable.

Thus, in known systems, a compromise or trade-off must be found between performance at high speed and at low speed. In this way, no overall satisfactory solution can be achieved by having a fixed step size $\mu$.

SUMMARY OF THE INVENTION

The present invention provides a signal receiving method and apparatus for mobile communication systems, and particularly for digital mobile phone systems, as defined in independent claims 1 and 7, respectively.

The principal idea underlying the present invention is that said frequency shift is estimated in said receiver and said step size of said filter coefficients is varied in said receiver dependent on said estimated frequency shift.

Suitably, the adaptive algorithm will then have an adaptive step size $\mu$ which is proportional to the Doppler frequency. This step size is adapted to the actual speed of a Doppler frequency.

A particular advantage of the present invention is the improved performance of high speed mobile communication systems with said adaptive algorithms. As stated above, in known systems the performance at high mobile speed and at a high carrier frequency is severely degraded compared to slow mobile speeds. The advantage of the invention is that one obtains increase performance in high speed while the preformance at low mobile speed is maintained.

Preferred embodiments of the present invention are listed in the dependent claims.

According to a preferred embodiment said received signal is despread before it is filtered. This step is a useful band conversion.

According to a further preferred embodiment said error signal is detected by passing said filtered signal through a symbol decision means for outputting detected symbols and by forming the difference between said detected symbols and said filtered signal. Thus, a reliable error signal may be obtained.

According to a further preferred embodiment said Doppler shift is estimated by comparing said received signal with said nominal value. F.e. said nominal value may be stored in the receiver or transmitted by a data message.

According to a further preferred embodiment said Doppler shift is estimated by detecting the velocity of said mobile communication system. This solution could be applied in an automotive application or similar.

According to a further preferred embodiment said step size is determined in accordance with a predetermined prestored table in said receiver. Thus, a certain step size is associated with a corresponding Doppler shift.

BRIEF DESCRIPTION OF THE DRAWINGS

The present invention will become more fully understood by the following detailed description of preferred embodiments thereof in conjunction with the accompaying drawings, in which:

Fig. 1    a schematic block diagramm for illustrating an embodiment of the method and apparatus according to the present invention; and

Fig. 2    is an implementation of a typical data receiver for UMTS with Doppler frequency compensation.

DESCRIPTION OF THE PREFERRED EMBODIMENTS

Figure 1 shows a schematic block diagramm for illustrating an embodiment of the method and apparatus according to the present invention.

In Figure 1, the same reference signs as in Figure 2 denote the same or equivalent elements. Particularly, in Figure 1 60 denotes a Doppler frequency estimator and 50' a modified adaptive weight control mechanism.

The received signal r(n) is used to estimate the Doppler frequency. In this embodiment, the stored nominal frequency $f_n$ of the received signal r(n) is compared to the actual frequency of the received signal r(n), namely by forming the difference $\Delta$.

The received signal r(n) which is a broad band is despread into a narrow band signal u(n) before it is filtered. The narrow band signal u(n) is then applied to the adaptive tranversal filter 20 which receives the filter coefficients h(n) from the adaptive weight control mechanism 50. The output of the adaptive transversal filter 20 y(n) is input to the decision mechanism 30 which receives signal values representing bits and decides whether the received digital values correspond to the logical value "1" or the logical value "0". The output signal of the decision mechanism 30, i.e. the detected symbols, are denoted x(n).

The difference between the filter output y(n) and the detected symbols x(n) is calculated in the adder 40 and is the error signal e(n). This error signal (e)n is fed to the adaptive weight control mechanism 50'.

Most importantly, the step size $\mu$ used the formula (1) in order to determine the filter coefficients h(n) is not fixed, but variable and determined in accordance with the estimated Doppler frequency output by the Doppler frequency estimator 60. Theretofore, a corresponding table is included in the adaptive weight control mechanism 50'.

Thus, e(n) and the variable adaptive step size $\mu$ are used to control the active tranversal filter 20.

Although the present invention has been described with respect to preferred embodiments thereof, it should be understood that many modifications can be performed without departing from the scope of the invention as defined by the appended claims.

Particularly, said step size is determined in accordance with a predetermined prestored table in said receiver according to the above described embodiment, this can also be done by an appropriate prestored algorithm.

Although in the shown embodiment the Doppler frequency estimator 60 estimates the Doppler frequency from the difference between the expected frequency and the acutal frequency, however, the present invention is not limited to this method. Another possibility would be measuring the speed of the mobile communication system and estimating the Doppler frequency therefrom. This method would be applicable in vehicles which have a speedometer.

**Claims**

1. A signal receiving method for mobile communication systems, and particularly for digital mobile phone systems, comprising the steps of:

   filtering a received signal (r(n)) having a Doppler frequency shift from a nominal frequency value by means of an adaptive filter (20);
   determining the filter coefficients (h(n)) of said adaptive filter (20) dependent on a detected error signal (e(n)) and a step size ($\mu$);
   estimating said Doppler frequency shift using the received Signal;
   varying said step size ($\mu$) of said filter coeffcients (h) dependent on the estimated Doppler frequency shift.

2. The method according to claim 1, wherein said received signal (r(n)) is despread before it is filtered.

3. The method according to claim 1 or 2, wherein said error signal (e(n)) is detected by passing said filtered signal (y(n)) through a symbol decision means (30) for outputting detected symbols ((x(n)) and by forming the difference between said detected symbols (x(n)) and said filtered signal (y(n)).

4. The method according to claim 1, 2 or 3, wherein said Doppler shift is estimated by comparing said received signal (r(n)) with said nominal values.

5. The method according to one of the preceeding claims, wherein said Doppler shift is estimated by detecting the velocity of said mobile communication system.

6. The method according to one of the preceeding claims, wherein said step size ($\mu$) is determined in accordance with a predetermined prestored table.

7. A signal receiving apparatus for mobile communication systems, and particularly for digital mobile phone systems, comprising:

   an adaptive filter (20) for filtering a received signal (r(n)) having a Doppler frequency shift from a nominal frequency value;
   a determining means (50') for determining the filter coefficients (h(n)) of said adaptive filter (20) dependent on a detected error signal (e(n)) and a step size ($\mu$);
   an estimating means (60) for estimating said Doppler frequency shift using the received signal;
   a varying means (50') for varying said step size ($\mu$) of said filter coefficients (h) dependent on the estimated Doppler frequency shift.

8. The apparatus according to claim 7, further comprising a despreading means (10) for despreading said received signal (r(n)).

9. The apparatus according to claim 7 or 8, further comprising a symbol decision means (30) for receiving said filtered signal (y(n)) and for outputting detected symbols ((x(n)) and an adding means for forming the difference between said detected symbols (x(n)) and said filtered signal (y(n)).

10. The apparatus according to claim 7, 8 or 9, wherein said estimating means (60) is adapted for estimating said Doppler shift by comparing said received signal (r(n)) with said nominal value ($f_n$).

11. The apparatus according to one of the preceeding claims 7 to 10, wherein said estimating means (60) is adapted for estimating said Doppler shift by detecting the velocity of said mobile communication system.

12. The apparatus according to one of the preceeding claims 8 to 11, wherein said varying means (50') is adapted for determining the step size ($\mu$) in accordance with a predetermined prestored table.

**Patentansprüche**

1. Signalempfangsverfahren für Mobilkommunikationssysteme und insbesondere für digitale Mobiltelefonsysteme, mit folgenden Schritten:

Filtern eines Empfangssignals (r(n)) mit einer Dopplerfrequenzverschiebung von einem Nennfrequenzwert mittels eines adaptiven Filters (20);

Bestimmen der Filterkoeffizienten (h(n)) dieses adaptiven Filters (20) in Abhängigkeit von einem erkannten Fehlersignal (e(n)) und einer Schrittgröße ($\mu$);

Schätzen der Dopplerfrequenzverschiebung unter Verwendung des Empfangssignals;

Verändern der Schrittgröße ($\mu$) der Filterkoeffizienten (h) in Abhängigkeit von der geschätzten Dopplerfrequenzverschiebung.

2. Verfahren nach Anspruch 1, wobei das Empfangssignal (r(n)) entspreizt wird, ehe es gefiltert wird.

3. Verfahren nach Anspruch 1 oder 2, wobei das Fehlersignal (e(n)) durch Durchführen des gefilterten Signals (y(n)) durch ein Symbolentscheidungsmittel (30) zum Ausgeben erkannter Symbole ((x(n)) und durch Bilden des Unterschieds zwischen den erkannten Symbolen (x(n)) und dem gefilterten Signal (y(n)) erkannt wird.

4. Verfahren nach Anspruch 1, 2 oder 3, wobei die Dopplerverschiebung durch Vergleichen des Empfangssignals (r(n)) mit dem Nennwert geschätzt wird.

5. Verfahren nach einem der vorhergehenden Ansprüche, wobei die Dopplerverschiebung durch Erkennen der Geschwindigkeit des Mobilkommunikationssystems geschätzt wird.

6. Verfahren nach einem der vorhergehenden Ansprüche, wobei die Schrittgröße ($\mu$) gemäß einer vorbestimmten vorgespeicherten Tabelle bestimmt wird.

7. Signalempfangsvorrichtung für Mobilkommunikationssysteme und insbesondere für digitale Mobiltelefonsysteme, mit folgendem:

einem adaptiven Filter (20) zum Filtern eines Empfangssignals (r(n)) mit einer Dopplerfrequenzverschiebung von einem Nennfrequenzwert,

Bestimmungsmittel (50) zum Bestimmen der Filterkoeffizienten (h(n)) des adaptiven Filters (20) in Abhängigkeit von einem erkannten Fehlersignal (e(n)) und einer Schrittgröße ($\mu$) ;

Schätzungsmittel (60) zum Schätzen der Dopplerfrequenzverschiebung unter Verwendung des Empfangssignals;

Veränderungsmittel (50') zum Verändern der Schrittgröße ($\mu$) der Filterkoeffizienten (h) in Abhängigkeit von der geschätzten Dopplerfrequenzverschiebung.

8. Vorrichtung nach Anspruch 7, weiterhin mit einem Entspreizungsmittel (10) zum Entspreizen des Empfangssignals (r(n)).

9. Vorrichtung nach Anspruch 7 oder 8, weiterhin mit einem Symbolentscheidungsmittel (30) zum Empfangen des gefilterten Signals (y(n)) und zum Ausgeben erkannter Symbole ((x(n)) und einem Addiermittel zum Bilden des Unterschieds zwischen den erkannten Symbolen (x(n)) und dem gefilterten Signal (y(n)).

10. Vorrichtung nach Anspruch 7, 8 oder 9, wobei das Schätzungsmittel (60) zum Schätzen der Dopplerverschiebung durch Vergleichen des Empfangssignals (r(n)) mit dem Nennwert ($f_n$) geeignet ist.

11. Vorrichtung nach einem der vorhergehenden Ansprüche 7 bis 10, wobei das Schätzungsmittel (60) zum Schätzen der Dopplerverschiebung durch Erkennen der Geschwindigkeit des Mobilkommunikationssystems geeignet ist.

12. Vorrichtung nach einem der vorhergehenden Ansprüche 8 bis 11, wobei das Veränderungsmittel (50') zum Bestimmen der Schrittgröße ($\mu$) gemäß einer vorbestimmten vorgespeicherten Tabelle geeignet ist.

**Revendications**

1. Procédé de réception d'un signal destiné aux systèmes de communication mobile, et particulièrement aux systèmes de téléphone mobile numérique, comprenant les étapes suivantes :

- filtrer un signal reçu (r(n)) ayant un décalage de fréquence Doppler par rapport à une valeur de fréquence nominale par un filtre adaptatif (20) ;
- déterminer les coefficients (h(n)) du filtre adaptatif (20) en fonction d'un signal d'erreur détecté (e(n)) et d'une taille de pas (μ) ;
- estimer le décalage de fréquence Doppler par le signal reçu ; et
- faire varier la taille de pas (μ) des coefficients de filtre (h) en fonction du décalage de fréquence Doppler estimé.

2. Procédé selon la revendication 1,
   selon lequel le signal reçu (r(n)) est désétalé avant d'être filtré.

3. Procédé selon la revendication 1 ou 2,
   selon lequel le signal d'erreur (e(n)) est détecté en passant le signal filtré (y(n)) dans un moyen de décision de symbole (30) destiné à extraire les symboles détectés ((x(n)), et en formant la différence entre les symboles détectés (x(n)) et le signal filtré (y(n)).

4. Procédé selon la revendication 1, 2 ou 3,
   selon lequel le décalage Doppler est estimé en comparant le signal reçu (r(n)) à la valeur nominale.

5. Procédé selon l'une quelconque des revendications précédentes, selon lequel le décalage Doppler est estimé en détectant la vitesse du système de communication mobile.

6. Procédé selon l'une quelconque des revendications précédentes, selon lequel la taille de pas (μ) est déterminée d'après un tableau prédéterminé préenregistré.

7. Appareil de réception de signal destiné aux systèmes de communication mobile, et particulièrement aux systèmes de téléphone mobile numérique, comprenant :

   - un filtre adaptatif (20) pour filtrer un signal reçu (r(n)) ayant un décalage de fréquence Doppler par rapport à une valeur de fréquence nominale ;
   - un moyen de détermination (50') pour déterminer les coefficients (h(n)) du filtre adaptatif (20) en fonction d'un signal d'erreur détecté (e(n)) et d'une taille de pas (μ) ;
   - un moyen d'estimation (60) pour estimer le décalage de fréquence Doppler par le signal reçu ;
   - un moyen de variation (50') pour faire varier la taille de pas (μ) des coefficients de filtre (h) en fonction du décalage de fréquence Doppler estimé.

8. Appareil selon la revendication 7, comprenant en outre un moyen de désétalement (10) destiné à désétaler le signal reçu (r(n)).

9. Appareil selon la revendication 7 ou 8, comprenant en outre un moyen de décision de symbole (30) destiné à recevoir le signal filtré (y(n)) et à sortir les symboles détectés (x(n)), et un moyen d'addition pour former la différence entre les symboles détectés (x(n)) et le signal filtré (y(n)).

10. Appareil selon la revendication 7, 8 ou 9, dans lequel le moyen d'estimation (60) est adapté pour estimer le décalage Doppler en comparant le signal reçu (r(n)) à la valeur nominale (f_n).

11. Appareil selon l'une des revendications 7 à 10, dans lequel le moyen d'estimation (60) est adapté pour estimer le décalage Doppler en détectant la vitesse du système de communication mobile.

12. Appareil selon l'une des revendications 8 à 11, dans lequel le moyen de variation (50') est adapté pour déterminer la taille de pas (μ) d'après un tableau prédéterminé préenregistré.

# FIG 1

# FIG 2